# EUROPEAN PATENT SPECIFICATION

(11) **EP 3 476 682 B1**
(45) Date of publication and mention of the grant of the patent: **13.12.2023**
(21) Application number: 18203815.8
(22) Date of filing: 31.10.2018
(51) Int. Cl.: B60W 30/14, B60W 50/14, G08G 1/0967, B60Q 1/44

(54) **SYSTEM METHOD TO CONTROL LOCOMOTION VEHICLES**
SYSTEM, VERFAHREN ZUR STEUERUNG VON FORTBEWEGUNGSMITTELN
PROCÉDÉ SYSTÈME DE COMMANDE DE VÉHICULES DE LOCOMOTION

(30) Priority: 31.10.2017 IT 201700123884
(43) Date of publication of application: 01.05.2019
(73) Proprietor: SAMI TECNICA S.R.L., 33100 Udine (UD) (IT)
(72) Inventor: Lavaroni, Giancarlo, 33042 Buttrio (UD) (IT)
(74) Representative: Petraz, Gilberto Luigi

(56) References cited:
- DE-A1-102005 056 881
- DE-A1-102012 211 967
- DE-U1- 20 111 039
- FR-A1- 2 839 377
- JP-A- H06 112 903
- US-A1- 2010 019 933
- US-A1- 2011 153 116

## Description

### FIELD OF THE INVENTION

The present invention concerns means and apparatuses which define a control system for locomotion vehicles, such as: automobiles, trucks, articulated trucks, campers, rail transport means, and also carriages, locomotives, boats, and similar means, or suchlike.

In particular, the system and the method to control locomotion vehicles in accordance with the present invention allows to control and regulate, also automatically, the speed of advance of a locomotion vehicle.

### BACKGROUND OF THE INVENTION

It is known that locomotion vehicles, in general, must respect the maximum allowed transit speed limits, usually indicated by road, rail, river, or similar signs. In fact, for example, in relation to the maximum speed limit signal, "30 km/h", motor vehicles travel at 35 km/h or 40 km/h or at a higher speed, for example, due to an objective difficulty on the driver's part in managing the locomotion vehicle.

This is dangerous in the case of automobiles, but it is even more so in the case of trucks, articulated trucks, or rail transport means, in relation to their mass, their inertia and the connected stopping times, in addition to problems related to blind spots.

There are automobiles that provide the driver with a certain speed, but this is only at the indication level and not related to a maximum speed limit allowed in that specific point, or section of road.

There are also systems to indicate a route which identify the maximum speed limits, but they are not precise, or updated, and in any case they always leave the driver the decision regarding which actual speed to drive at.

Document US 2011/0153116A1, on which the preamble of the independent claims is based, describes a system for determining the status of adherence to a traffic regulation wherein an equipment determines if the vehicle is in adherence to the traffic regulation and appropriate information and/or cues are provided to the driver of the vehicle. Cues can be visual, audible, mechanical (vibration), or a combination thereof. The equipment on the vehicle can be a stand-alone receiver unit, a part of the vehicle, a communication device, or a combination thereof.

Furthermore, documents DE-A-10.2012.211967, AU-A-2008.216.988 and US-A-2017/190286 describe solutions based on the sending of information regarding speed limits using GPS modules. This GPS information is acquired by a GPS reader on the vehicle and then checks the transit speeds of the vehicles. The transmission and reception of information through GPS modules, however, does not allow to provide a control system with high efficiency, since GPS signals can sometimes be unavailable or not reachable in all areas.

Document US-A-2005/0267658 also describes a system to notify and respect the speed limits of the traffic and stop signs for road vehicles, which provides to install, wherever necessary, information labels showing information relating to speed limits, or stop signs to be respected. The road vehicle is also provided with an information reader able to read, in wireless mode, the information contained in the information labels while the vehicle is passing. The information read is displayed on a vehicle display to notify the driver of the new speed limit required for that specific section of road. The road vehicle is also provided with a speed control unit which uses the reading of the speed detected to oblige the vehicle to transit only inside the set speed limits.

The labels are generally defined by radio frequency identification labels also known as RFID "Radio Frequency IDentification" tags, while the information reader is generally an RFID reader.

In the case where the RFID tags are the passive type, it is provided that, when the vehicle passes, the RFID tag is powered, for example electrically, to allow the latter to emit an electromagnetic radio frequency signal. The power can be supplied to the RFID tag wirelessly by the RFID reader of the vehicle in transit. This solution, however, makes the exchange of information between the RFID tag and the RFID reader extremely slow and more often than not incompatible with the transit speeds of the vehicles.

Solutions of active RFID tags are also known, that is, provided with their own internal power supply, for example supplied by a battery, which allows the RFID tag to constantly emit an information signal.

One limitation of this solution is the reduced emission distance of the RFID tag signal due to the physical limits of the tag.

Another disadvantage of this known solution is that the RFID tag signal emission is notoriously an emission that is uncontrolled in space and spherical, that is, it departs from the RFID tag in all directions, at 360°. This makes the readings by the RFID reader particularly complex if, in one zone of the section of road, having, for example, multiple roadways, multiple RFID tags are installed, each identifying different limits for each roadway.

This solution does not allow to precisely control the road information that the RFID tag provides to the RFID reader normally installed on the vehicle.

Another limitation of this known solution is due to the considerable disturbances to which the electromagnetic signals emitted by the RFID tags are subjected. For example, the presence of metal parts of the vehicles in transit in parallel, or of components on which RFID tags are installed, or particular atmospheric conditions, can deviate and/or screen the signal emitted, not allowing the RFID reader to read correctly.

One purpose of the invention is therefore to guarantee a high operating efficiency of the system in any road configuration and in any atmospheric environment, to ensure greater road safety.

The present invention is intended to ensure in an automatic manner the certain respect of maximum speed limits imposed, while guaranteeing that the driver has the possibility to manage the maximum speed level manually, if so desired.

Another purpose of the invention is to allow the authorities to adapt the control and management system to possible variations in the maximum speed limits, if deemed necessary.

Another purpose of the invention is to signal to a driver, in an acoustic and visual manner, that he/she has entered into an area of maximum speed limit so that he/she can act appropriately according to the situation.

Another purpose of the invention is to reduce the frequency of accelerations and decelerations of the locomotion vehicles with the aim of reducing the emissions of pollutants and, therefore, of safeguarding the environment more.

Another purpose is to provide a control and automatic management system to reduce the stress of a driver, encouraging greater attention to the driving of the locomotion vehicle.

Another purpose of the present invention is to provide a system and to perfect the corresponding method to increase the road safety of a driver and third parties, and to reduce accidents on the roads and at work.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

The use of infrared ray emitters allows to obtain an extremely precise and reliable system to control the transit speed of vehicles, possibly for each single roadway where the vehicles travel, and in which external conditions do not condition/influence the functioning of the whole system.

The use of infrared emitters allows to obtain an extremely reliable system under any environmental condition, whether darkness, rain, wind or suchlike. Moreover, the use of infrared type emitters avoids any screening phenomena due to the presence of metal parts of the vehicles in parallel transit, for example.

The emission elements can be installed in proximity to a road sign, or on a guardrail, a gate structure, a post or similar and comparable elements.

The second control and command unit intervenes on the speed control system of the locomotion vehicle taking it, in the desired terms, also gradually, to the indicated speed. The speed control system can be, for example, the system known as cruise control or other types of system suitable to set the forward motion of the vehicle at a predefined transit speed.

The action of the speed control system can completely replace that of the driver's intention, obliging the locomotion vehicle to transit at the desired speed.

According to a second variant, the intervention of the control system, according to the present invention, allows to intervene in the speed set or desired by the driver, but the driver can still operate on the speed, possibly, for a defined time, for example, to avoid an accident.

According to another variant, any intervention on the vehicle's forward speed can be preceded by an optical or acoustic signal which warns the driver.

In this way, the driver can adapt his driving style in a timely manner according to the situation before him, reducing the risk of accidents occurring on the road and during work.

According to another variant, the system according to the present invention comprises a signaling element which allows to signal, for example in the rear part of the locomotion vehicle, the action at least of reducing the transit speed of the locomotion vehicle, in order to prevent those behind from being in an uncomfortable situation.

This aspect further promotes the reduction of the risk of accidents.

According to a variant, on board the vehicle there are also known reading means which read the maximum speed limit signals present on the roadside, for example on road signs. The readings, generally performed in optical mode, can be used to validate the correct functioning of the control system, in accordance with the present invention, or to compare the maximum speed limit signal read with the reading means with the maximum speed limit signal read with the reception element according to the present invention. In the event that there is a discrepancy between these values, the control system is configured to send an error signal.

According to another variant, the elements that receive the maximum speed limit signal can also receive signals which indicate, for example, a dangerous curve, dangerous crossing, dangerous descent, uneven road, etc. The latter signals can also be provided by the emission elements themselves.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic diagram of a control system for locomotion vehicles according to one embodiment;
- fig. 2 is a schematic diagram of the control system for locomotion vehicles according to a variant embodiment;
- fig. 3 is a diagram of the functioning of the control system in figs. 1 or 2;
- fig. 4 is a schematic illustration of the control system for locomotion vehicles in accordance with a possible embodiment of the present invention.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF SOME EMBODIMENTS

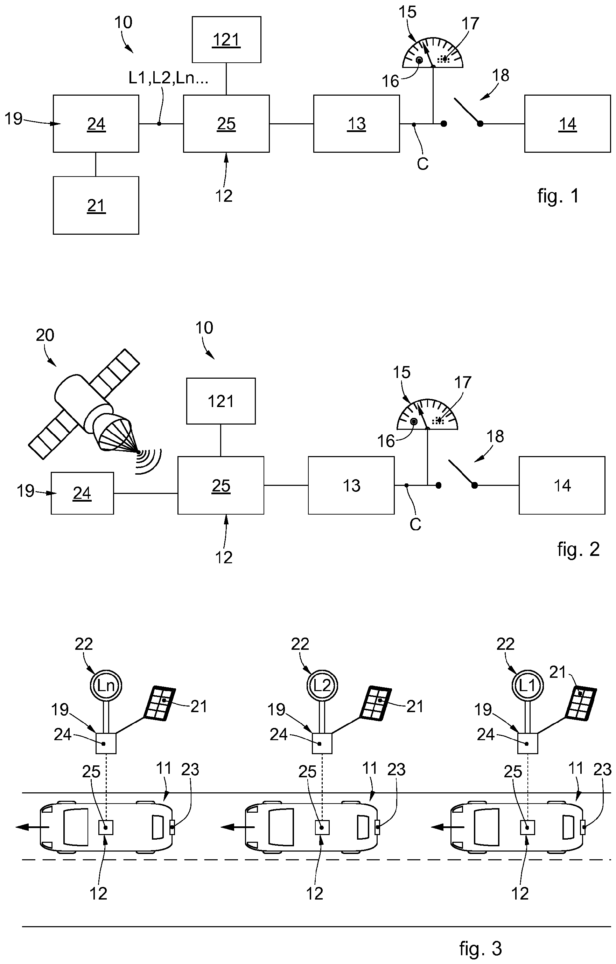

With reference to figs. 1 to 4 we will now describe possible embodiments of the present invention of a control system 10 for a locomotion vehicle 11.

The term locomotion vehicle 11 can include an automobile, a truck, an articulated truck, a camper, rail transport means, such as a train, a tram, or suchlike.

According to one aspect of the present invention, the system 10 comprises a plurality of emission elements 19 autonomous to and outside the locomotion vehicle 11 and configured to emit respective maximum transit speed limit signals L1, L2, Ln allowed for the locomotion vehicle 11.

Each emission element 19 is installed outside the locomotion vehicle 11.

In accordance with a possible solution of the present invention, each emission element 19 can be installed on a road sign 22 which indicates a new speed limit allowed for a predefined section of road. The maximum speed limit L1, L2, Ln can also be indicated on a road sign 22 installed on the section of road.

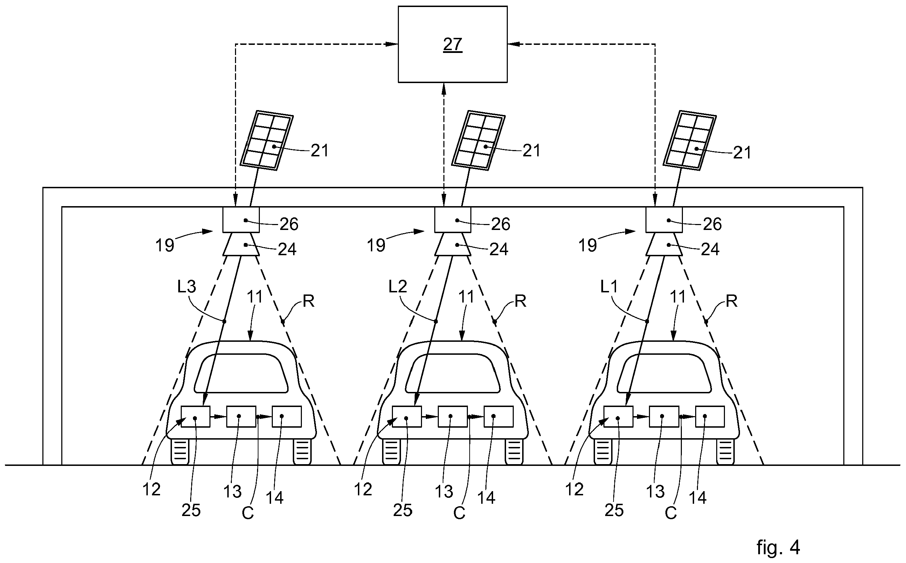

According to a possible variant embodiment, the emission elements 19 can be installed on a support structure, for example a gantry, which covers the entire width of a roadway as shown for example in fig. 4.

According to one aspect of the present invention, the emission elements 19 comprise infrared ray emitters 24 configured to emit infrared rays R with predefined emission parameters. The emission parameters are correlated to respective signals of a maximum speed limit L1, L2, Ln as defined above.

In accordance with a possible solution, the emission parameters can comprise at least one of either an emission frequency, a wave width, a wavelength, an intensity or suchlike. In particular, by modifying one and/or the other of the emission parameters identified above, it is possible to associate a specific maximum vehicle transit speed limit can be with each combination of emission parameters.

According to a possible solution of the invention, the infrared ray emitters 24 can operate at frequencies comprised between 20kHz and 100kHz, preferably between 20kHz and 50kHz.

According to possible embodiments, the infrared ray emitters 24 can each have a range of action comprised between 5m and 30m, preferably between 10m and 25m.

According to a possible solution of the present invention, the infrared ray emitters 24 can have a power comprised between 0.5W and 5W, preferably between 0.5W and 2W.

According to to the invention as claimed, the emission elements 19 comprise regulation members 26 configured to regulate the field of emission of the infrared rays, or band.

In particular, by regulation of the emission field we mean the amplitude, the orientation, the angle of divergence according to which the infrared rays are emitted.

This allows to suitably control the field of action of each of the emission elements 19 such that, according to the invention as claimed, the infrared rays emitted by emission elements 19 located in direct proximity to each other (fig. 4), for example adjacent to each other on the width of the roadway, are prevented from overlapping each other, thus generating wrong data acquisition by the reception element 12.

For this purpose the regulation members 26 can comprise electronic modules configured to regulate the field of emission of the infrared rays R. Furthermore, or alternatively, the regulation members 26 can comprise mechanical means, for example optical deflectors or conveyors, configured to convey the infrared rays into a predefined zone of the road route.

The regulation members 26 can be configured to regulate the emission width of the infrared rays on the roadway, for example by limiting them to a predefined lane.

In accordance with a possible solution of the present invention (fig. 4), the emission elements 19 can be connected, also in wireless mode, to a central control and command unit 27 which is configured to assign to each emission element 19 the respective maximum speed limit L1, L2, Ln.

The particular type of emission elements 19, that is, the infrared type, in fact allows the central control and command unit 27 to program, even remotely, the emission parameters of each infrared ray emitter 24, for example in relation to particular road traffic control needs, due for example to slowdowns, traffic jams, accidents, or suchlike. By modifying the emission parameters, it is possible to modify the transit speed limits of the vehicles which detect said speed limits.

In some embodiments, each emission element 19 can emit a maximum speed limit signal L1 starting from the road sign 22 in which it is installed, up to a subsequent emission element 19 having another speed limit L2.

According to one embodiment, an electric power device 21 of the emission elements 19 can be connected to each emission element 19, in the case shown here a photovoltaic device 21 connected to the emission element 19.

According to a variant embodiment, the emission element 19 can be connected to an electric power supply to power the emission element 19, possibly in combination with the electric power device 21.

The system 10 comprises at least one reception element 12 installed inside the locomotion vehicle 11 and configured to receive the signal of a maximum allowed speed limit L1, L2, Ln provided by the emission element 19.

According to a possible solution of the present invention, the reception element 12 installed on the vehicle comprises an infrared detector 25 which is configured to detect the infrared rays R emitted by the infrared emitters 24.

According to a possible solution, the infrared detector 25 can be configured to detect, at each passage in correspondence with one of the emission elements 19, the infrared rays R emitted and therefore the maximum speed limits allowed for that predefined section of road.

In accordance with a possible solution, the system 10 according to the present invention comprises a user interface 15 connected to the reception element 12 and configured to provide a visual or audio indication of the maximum speed limit signal L1, L2, Ln read by the reception element 12.

The user interface 15 can be installed on the dashboard of the locomotion vehicle 11.

Advantageously, the driver is allowed to know continuously the maximum speed limit allowed in the section of the route in which the locomotion vehicle 11 is traveling.

The user interface 15 can be provided with at least one lighting element 16, or a display, configured to emit a light, for example, colored.

The user interface 15 can also be provided with a sound element 17 configured to emit a warning sound, continuous, intermittent or temporally limited, audible to the driver.

The system 10 also comprises a first control and command unit 13 configured to receive the signal relating to a new allowed speed limit and to process a command signal C to be sent at least to a second speed control and command unit 14.

It can be provided that the first control and command unit 13 has one or more modules configured to detect the infrared rays R, to estimate their emission parameters, to compare them with pre-memorized emission parameters, and determine the maximum speed limit L1, L2, Ln attributed to the specific emission parameters.

By way of example only, the first control and command unit 13 can comprise at least one memory in which the emission parameters are memorized, together with the maximum speed limits L1, L2, Ln attributed to the latter.

The second speed control and command unit 14 can be any device configured to receive the command signal C from the first control and command unit 13 and intervene on the locomotion vehicle 11 to control the transit speed of the vehicle as a function of a maximum speed limit L1, L2, Ln.

In accordance with a possible solution of the invention, the second control and command unit 14 can comprise a cruise control system or a similar and comparable system which allows to control the speed of the locomotion vehicle 11.

The reception element 12, in cooperation with the first control and command unit 13 and/or with the second control and command unit 14, allows to act in appropriate times and gradually on the speed of the locomotion vehicle 11. Consequently, it is possible to reduce the frequency of sudden accelerations and decelerations, thus reducing emissions of polluting substances into the environment.

Furthermore, avoiding sudden accelerations and decelerations allows to improve the safety of the locomotion vehicles 11 and considerably reduce the risk of accidents.

Advantageously, the second control and command unit 14 allows a driver to concentrate his/her attention on the road, improving reflexes, reactivity and allowing a more relaxed driving mode. In this way, the driver can have a more relaxed perception of driving without the presence of driving stress factors.

The second control and command unit 14 allows the driver to never exceed the maximum speed limit L1, L2, Ln and guarantees greater safety in driving for the driver and for third parties.

According to a variant, the signal of the second control and command unit 14, or of another unit of the system 10, can be forced, temporally or continuously, by the driver if, in his/her opinion, a different speed is required, for example, to avoid a danger.

The second control and command unit 14 is configured to intervene on the speed of the locomotion vehicle 11 to condition the speed according to a maximum speed limit L1, L2, Ln, preset for a predefined section of road.

Moreover, the system 10 comprises a switch device 18, which can be deactivated by the driver, configured to selectively connect the first control and command unit 13 and the second control and command unit 14, and to define a selective drive of the second control unit and command 14 on the mode of travel of the vehicle 11.

According to one operating mode, if the switch device 18 is activated and, therefore, connects the first control and command unit 13 with the second control and command unit 14, the second control and command unit 14 limits the speed of the locomotion vehicle 11 if it is greater than the limit L1, L2, Ln even if the driver presses the accelerator.

If the speed of the locomotion vehicle 11 is lower than the limit L1, L2, Ln, the driver can accelerate by pressing the accelerator until the maximum speed limit L1, L2, or Ln is reached.

According to another operating mode, if the switch device 18 is deactivated, the first control and command unit 13 sends the processed signal to the user interface 15, to alert the driver, for example by means of an acoustic or light signal, that the locomotion vehicle 11 is about to exceed, or has exceeded, the maximum speed limit L1, L2, or Ln. In this case, the speed of the locomotion vehicle 11 is managed manually by the driver who is able to accelerate and decelerate in a desired manner.

In accordance with a possible implementation of the present invention, the system 10 can comprise a positioning device 20, for example a geolocation device, configured to provide other auxiliary speed limit signals on a predefined section of road that the vehicle is traveling on.

The auxiliary speed limit signals can be detected by the reception element 12 and compared, for example by the first control and command unit 13, with the maximum speed limit signals L1, L2, Ln emitted by the emission elements 19. If the first control and command unit 13 detects a discrepancy between the maximum speed limit signals L1, L2, Ln and the auxiliary speed limit signal, for a predefined road segment, it can communicate an error signal, causing the vehicle to proceed at the minimum speed between the two detected speeds.

For example, the positioning device 20 is a GPS satellite device.

According to a variant embodiment of the present invention, the system 10, according to the present invention, can comprise an optical detector 121 installed on the vehicle 11 and configured to optically detect, for example by means of a camera, a speed limit shown on the road sign 22.

The speed limit read from the road sign 22 can be used in the same way as the auxiliary speed limit signal supplied by the positioning device 20, to validate the speed limit detected by the emission element 19.

According to one embodiment, shown by way of example in fig. 3, the system 10 can activate, for a more or less defined time, a signaling element 23 located, for example, on the back of the locomotion vehicle 11, so as to alert the driver behind of any modification of the speed of travel taking place.

The present invention also concerns a method to control the speed of locomotion vehicles 11 which comprises:
- emitting maximum transit speed limit signals L1, L2, Ln allowed for a locomotion vehicle 11 by a plurality of emission elements 19 autonomous to and outside the locomotion vehicle 11;
- receiving the maximum allowed speed limit signal L1, L2, Ln with at least one reception element 12 installed on the locomotion vehicle 11;
- receiving the maximum speed limit signal L1, L2, Ln in a first control and command unit 13 and processing a command signal C;
- receiving the command signal C emitted by the first control and command unit 13 in a second control and command unit 14 that regulates the speed of advance of the locomotion vehicle 11 as a function of the maximum speed limit L1, L2, Ln detected.

According to one aspect of the method according to the present invention, the emission elements 19 comprise infrared ray emitters 24 which emit infrared rays R with predefined emission parameters. Moreover, the reception element 12 comprises an infrared detector 25 which detects the infrared rays R emitted by the emission elements 19.

It is clear that modifications and/or additions of parts can be made to the system 10 and method as described heretofore, without departing from the field and scope of the present invention.

It is also clear that, although the present invention has been described with reference to some specific examples, a person of skill in the art shall certainly be able to achieve many other equivalent forms of system 10 and method, having the characteristics as set forth in the claims and hence all coming within the field of protection defined thereby.

## Claims

1. System to control the speed of locomotion vehicles (11), said system comprising:
- a plurality of emission elements (19) autonomous to and outside the locomotion vehicle (11) and configured to emit respective signals of a maximum transit speed limit (L1, L2, Ln) allowed for the locomotion vehicle (11);
- at least a reception element (12) installed on the locomotion vehicle (11), and configured to receive said signal of a maximum speed limit (L1, L2, Ln) allowed,
- a first control and command unit (13) configured to receive said signal of a maximum speed limit (L1, L2, Ln) and to process a command signal (C);
- a second speed control and command unit (14) configured to receive said command signal (C) emitted by the first control and command unit (13), and to regulate the speed of advance of the locomotion vehicle (11) as a function of said maximum speed limit (L1, L2, Ln) detected,
wherein said emission elements (19) comprise infrared ray emitters (24) configured to emit infrared rays (R) with predefined emission parameters, said emission parameters being correlated to respective signals of a maximum speed limit (L1, L2, Ln), and wherein said reception element (12) comprises an infrared detector (25) configured to detect said infrared rays (R),
**characterized in that** said emission elements (19) comprise regulation members (26) configured to regulate the emission field of said infrared rays (24) such that infrared rays emitted by emission elements (19) located in direct proximity to each other are prevented from overlapping each other, thus generating wrong data acquisition by the reception element (12).

2. System as in claim 1, **characterized in that** it comprises a user interface (15) connected to the reception element (12) and configured to give an indication, either visual or audio, of the signal of a maximum speed limit (L1, L2, Ln) read with said reception element (12).

3. System as in claim 1, **characterized in that** it comprises a switch device (18), able to be activated/deactivated to selectively connect to each other the first control and command unit (13) and the second speed control and command unit (14).

4. System as in any claim hereinbefore, **characterized in that** said emission elements (19) are connected to a central control and command unit (27), said central control and command unit (27) being configured to attribute to each emission element (19) a respective maximum speed limit (L1, L2, Ln).

5. System as in any claim hereinbefore, **characterized in that** each of said emission elements (19) is connected to an electric power device (21) of the emission elements (19).

6. System as in any claim hereinbefore, **characterized in that** said second control and command unit (14) comprises a cruise control system.

7. System as in any claim hereinbefore, **characterized in that** it comprises a positioning device (20) configured to supply further auxiliary speed limit signals of a predefined section of road that the vehicle is travelling on, said auxiliary speed limit signals being detected by said reception element (12) and compared with the maximum speed limit signals (L1, L2, Ln) emitted by the emission elements (19).

8. Method to control the speed of locomotion vehicles (11), comprising:
- emitting maximum transit speed limit signals (L1, L2, Ln) allowed for a locomotion vehicle (11) by a plurality of emission elements (19) autonomous to and outside said locomotion vehicle (11);
- receiving said maximum allowed speed limit signal (L1, L2, Ln) with at least one reception element (12) installed on the locomotion vehicle (11);
- receiving said maximum speed limit signals (L1, L2, Ln) in a first control and command unit (13) and processing a command signal (C);
- receiving said command signal (C) emitted by the first control and command unit (13) in a second control and command unit (14) that regulates the speed of advance of the locomotion vehicle (11) as a function of said maximum speed limit (L1, L2, Ln) detected,
wherein said emission elements (19) comprise infrared ray emitters (24) that emit infrared rays (R) with predefined emission parameters, said emission parameters being correlated to respective signals of a maximum speed limit (L1, L2, Ln), wherein said reception element (12) comprises an infrared detector (25) that detects said infrared rays (R) emitted by said emission elements (19),
**characterized in that** it comprises the regulation of the emission field of said infrared rays (24) by means of regulation members (26) provided in said emission elements (19), such that infrared rays emitted by emission elements (19) located in direct proximity to each other are prevented from overlapping each other, thus generating wrong data acquisition by the reception element (12).

## Patentansprüche

1. System zur Steuerung der Geschwindigkeit von Fortbewegungsfahrzeugen (11), wobei das System umfasst:
- eine Vielzahl von Emissionselementen (19), die unabhängig von und außerhalb des Fortbewegungsfahrzeugs (11) sind und dazu konfiguriert sind, entsprechende Signale einer Höchstdurchfahrtsgeschwindigkeitsbegrenzung (L1, L2, Ln) zu emittieren, die für das Fortbewegungsfahrzeug (11) zulässig ist;
- mindestens ein Empfängerelement (12), das an dem Fortbewegungsfahrzeug (11) installiert ist und dazu konfiguriert ist, das Signal einer zulässigen Höchstgeschwindigkeitsbegrenzung (L1, L2, Ln) zu empfangen,
- eine erste Steuer- und Befehlseinheit (13), die dazu konfiguriert ist, das Signal für eine Höchstgeschwindigkeitsbegrenzung (L1, L2, Ln) zu empfangen und ein Befehlssignal (C) zu verarbeiten;
- eine zweite Steuer- und Befehlseinheit (14), die dazu konfiguriert ist, das von der ersten Steuer- und Befehlseinheit (13) emittierte Befehlssignal (C) zu empfangen und die Fortbewegungsgeschwindigkeit des Fortbewegungsfahrzeugs (11) als Funktion der erfassten Höchstgeschwindigkeitsbegrenzung (L1, L2, Ln) zu regeln,
wobei die Emissionselemente (19) Infrarotstrahlemitter (24) umfassen, die dazu konfiguriert sind, Infrarotstrahlen (R) mit vordefinierten Emissionsparametern zu emittieren, wobei die Emissionsparameter mit jeweiligen Signalen einer Höchstgeschwindigkeitsbegrenzung (L1, L2, Ln) korreliert sind, und wobei das Empfängerelement (12) einen Infrarotdetektor (25) umfasst, der dazu konfiguriert ist, die Infrarotstrahlen (R) zu erfassen,
**dadurch gekennzeichnet, dass** die Emissionselemente (19) Regulierungselemente (26) umfassen, die dazu konfiguriert sind, das Emissionsfeld der Infrarotstrahlen (24) so zu regulieren, dass Infrarotstrahlen, die von Emissionselementen (19) emittiert werden, die sich in direkter Nähe zueinander befinden, daran gehindert werden, sich gegenseitig zu überlappen, so dass eine falsche Datenerfassung durch das Empfangselement (12) erfolgt.

2. System nach Anspruch 1, **dadurch gekennzeichnet, dass** es eine Benutzerschnittstelle (15) umfasst, die mit dem Empfängerelement (12) verbunden und dazu konfiguriert ist, eine visuelle oder akustische Anzeige des Signals einer Höchstgeschwindigkeitsbegrenzung (L1, L2, Ln) zu geben, das mit dem Empfängerelement (12) gelesen wurde.

3. System nach Anspruch 1, **dadurch gekennzeichnet, dass** es eine Schaltvorrichtung (18) umfasst, die aktiviert/deaktiviert werden kann, um die erste Steuer- und Befehlseinheit (13) und die zweite Geschwindigkeits-Steuer- und Befehlseinheit (14) selektiv miteinander zu verbinden.

4. System nach einem der vorhergehenden Ansprüche, **dadurch gekennzeichnet, dass** die Emissionselemente (19) mit einer zentralen Steuer- und Befehlseinheit (27) verbunden sind, wobei die zentrale Steuer- und Befehlseinheit (27) dazu konfiguriert ist, jedem Emissionselement (19) eine jeweilige Höchstgeschwindigkeitsbegrenzung (L1, L2, Ln) zuzuordnen.

5. System nach einem der vorhergehenden Ansprüche, **dadurch gekennzeichnet, dass** jedes der Emissionselemente (19) mit einer Stromversorgungsvorrichtung (21) der Emissionselemente (19) verbunden ist.

6. System nach einem der vorhergehenden Ansprüche, **dadurch gekennzeichnet, dass** die zweite Steuer- und Befehlseinheit (14) eine Geschwindigkeitsregelanlage umfasst.

7. System nach einem der vorhergehenden Ansprüche, **dadurch gekennzeichnet, dass** es eine Positionierungsvorrichtung (20) umfasst, die dazu konfiguriert ist, weitere Hilfsgeschwindigkeitsbegrenzungssignale eines vordefinierten Straßenabschnitts, auf dem das Fahrzeug fährt, zu liefern, wobei die Hilfsgeschwindigkeitsbegrenzungssignale von dem Empfängerelement (12) erfasst und mit den von den Emissionselementen (19) emittierten Höchstgeschwindigkeitsbegrenzungssignalen (L1, L2, Ln) verglichen werden.

8. Verfahren zur Steuerung der Geschwindigkeit von Fortbewegungsfahrzeugen (11), das folgendes umfasst:
- Emittieren von Höchstdurchfahrtsgeschwindigkeitsbegrenzungssignalen (L1, L2, Ln), die für ein Fortbewegungsfahrzeug (11) zulässig sind, durch eine Vielzahl von Emissionselementen (19), die unabhängig von und außerhalb des Fortbewegungsfahrzeugs (11) sind;
- Empfangen der Höchstgeschwindigkeitsbegrenzungssignale (L1, L2, Ln) mit mindestens einem Empfängerelement (12), das an dem Fortbewegungsfahrzeug (11) installiert ist;
- Empfangen der Höchstgeschwindigkeitsbegrenzungssignale (L1, L2, Ln) in einer ersten Steuer- und Befehlseinheit (13) und Verarbeiten eines Befehlssignals (C);
- Empfangen des von der ersten Steuer- und Befehlseinheit (13) emittierten Befehlssignals (C) in einer zweiten Steuer- und Befehlseinheit (14), die die Fortbewegungsgeschwindigkeit des Fortbewegungsfahrzeugs (11) als Funktion der erfassten Höchstgeschwindigkeitsbegrenzung (L1, L2, Ln) regelt,
wobei die Emissionselemente (19) Infrarotstrahlemitter (24) umfassen, die Infrarotstrahlen (R) mit vordefinierten Emissionsparametern emittieren, wobei die Emissionsparameter mit jeweiligen Signalen einer Höchstgeschwindigkeitsbegrenzung (L1, L2, Ln) korreliert sind,
wobei das Empfangselement (12) einen Infrarotdetektor (25) umfasst, der die von den Emissionselementen (19) emittierten Infrarotstrahlen (R) erfasst,
**dadurch gekennzeichnet, dass** es die Regulierung des Emissionsfeldes der Infrarotstrahlen (24) mittels Regulierungselementen (26) umfasst, die in den Emissionselementen (19) vorgesehen sind, so dass Infrarotstrahlen, die von in direkter Nähe zueinander angeordneten Emissionselementen (19) emittiert werden, daran gehindert werden, sich gegenseitig zu überlappen, so dass eine falsche Datenerfassung durch das Empfangselement (12) erfolgt.

## Revendications

1. Système pour commander la vitesse de véhicules de locomotion (11), ledit système comprenant :
- une pluralité d'éléments d'émission (19) autonomes au véhicule de locomotion (11) et à l'extérieur de celui-ci, et configurés pour émettre des signaux respectifs d'une limite de vitesse de transit maximale (L1, L2, Ln) autorisée pour le véhicule de locomotion (11) ;
- au moins un élément de réception (12) installé sur le véhicule de locomotion (11), et configuré pour recevoir ledit signal d'une limite de vitesse maximale (L1, L2, Ln) autorisée,
- une première unité (13) de régulation et de commande configurée pour recevoir ledit signal d'une limite de vitesse maximale (L1, L2, Ln) et pour traiter un signal de commande (C) ;
- une deuxième unité (14) de régulation et de commande de vitesse configurée pour recevoir ledit signal de commande (C) émis par la première unité (13) de régulation et de commande, et pour réguler la vitesse d'avance du véhicule de locomotion (11) en fonction de ladite limite de vitesse maximale (L1, L2, Ln) détectée,
dans lequel, lesdits éléments d'émission (19) comprennent des émetteurs de rayons infrarouges (24) configurés pour émettre des rayons infrarouges (R) avec des paramètres d'émission prédéfinis, lesdits paramètres d'émission étant corrélés à des signaux respectifs d'une limite de vitesse maximale (L1, L2, Ln), et dans lequel ledit élément de réception (12) comprend un détecteur infrarouge (25) configuré pour détecter lesdits rayons infrarouges (R),
**caractérisé en ce que** lesdits éléments d'émission (19) comprennent des éléments de régulation (26) configurés pour réguler le champ d'émission desdits rayons infrarouges (24) de sorte que les rayons infrarouges émis par des éléments d'émission (19) situés à proximité directe les uns des autres soient empêchés de se chevaucher entre eux, générant ainsi une mauvaise acquisition de données par l'élément de réception (12).

2. Système selon la revendication 1, **caractérisé en ce qu'**il comprend une interface utilisateur (15) connectée à l'élément de réception (12) et configurée pour donner une indication, visuelle ou sonore, du signal d'une limite de vitesse maximale (L1, L2, Ln) lu avec ledit élément de réception (12).

3. Système selon la revendication 1, **caractérisé en ce qu'**il comprend un dispositif commutateur (18), apte à être activé/désactivé pour connecter sélectivement entre elles la première unité (13) de régulation et de commande et la deuxième unité (14) de régulation et de commande de vitesse.

4. Système selon l'une quelconque des revendications précédentes, **caractérisé en ce que** lesdits éléments d'émission (19) sont reliés à une unité centrale (27) de régulation et de commande, ladite unité centrale (27) de régulation et de commande étant configurée pour attribuer à chaque élément d'émission (19) une limite de vitesse maximale respective (L1, L2, Ln).

5. Système selon l'une quelconque des revendications précédentes, **caractérisé en ce que** chacun desdits éléments d'émission (19) est connecté à un dispositif d'alimentation électrique (21) des éléments d'émission (19).

6. Système selon l'une quelconque des revendications précédentes, **caractérisé en ce que** ladite deuxième unité (14) de régulation et de commande comprend un système de régulation de vitesse.

7. Système selon l'une quelconque des revendications précédentes, **caractérisé en ce qu'**il comprend un dispositif de positionnement (20) configuré pour fournir d'autres signaux auxiliaires de limitation de vitesse d'un tronçon de route prédéfini sur lequel se déplace le véhicule, lesdits signaux auxiliaires de limitation de vitesse étant détectés par ledit élément de réception (12) et comparé aux signaux (L1, L2, Ln) de limitation de vitesse maximale émis par les éléments d'émission (19).

8. Procédé de commande de la vitesse de véhicules de locomotion (11), prévoyant :
- l'émission des signaux (L1, L2, Ln) de limite de vitesse de transit maximale autorisés pour un véhicule de locomotion (11) par une pluralité d'éléments d'émission (19) autonomes au et à l'extérieur dudit véhicule de locomotion (11) ;
- la réception dudit signal (L1, L2, Ln) de limite de vitesse maximale autorisée avec au moins un élément de réception (12) installé sur le véhicule de locomotion (11) ;
- la réception desdits signaux (L1, L2, Ln) de limitation de vitesse maximale dans une première unité (13) de régulation et de commande et le traitement d'un signal de commande (C) ;
- la réception dudit signal de commande (C) émis par la première unité (13) de régulation et de commande dans une deuxième unité (14) de régulation et de commande qui régule la vitesse d'avance du véhicule de locomotion (11) en fonction de ladite limite de vitesse maximale (L1, L2, Ln) détectée,
selon lequel, lesdits éléments d'émission (19) comprennent des émetteurs de rayons infrarouges (24) qui émettent des rayons infrarouges (R) avec des paramètres d'émission prédéfinis, lesdits paramètres d'émission étant corrélés à des signaux respectifs (L1, L2, Ln) d'une limite de vitesse maximale, ledit élément de réception (12) comprenant un détecteur infrarouge (25) qui détecte lesdits rayons infrarouges (R) émis par lesdits éléments d'émission (19),
**caractérisé en ce qu'**il prévoit la régulation du champ d'émission desdits rayons infrarouges (24) au moyen d'éléments de régulation (26) prévus dans lesdits éléments d'émission (19), de sorte que les rayons infrarouges émis par les éléments d'émission (19) situés à proximité directe les uns des autres sont empêchés de se chevaucher, générant ainsi une mauvaise acquisition de données par l'élément de réception (12).
